# EUROPEAN PATENT SPECIFICATION

(11) **EP 0 627 856 B1**
(45) Date of publication and mention of the grant of the patent: **19.09.2001**
(21) Application number: 94107932.9
(22) Date of filing: 24.05.1994
(51) Int. Cl.: H04N 7/087

(54) **Top teletext decoder with an improved command device correlating the + and - keys to the coloured selection keys**
TOP-Teletextdekoder mit einer verbesserten Steuereinrichtung die die + und - Tasten mit den Farbauswahltasten korreliert
Décodeur de télétexte de type TOP avec dispositif de commande amélioré corrélant les touches + et - aux touches de sélection de couleur

(30) Priority: 25.05.1993 IT RM930351
(43) Date of publication of application: 07.12.1994
(73) Proprietor: EDICO S.r.l., 00197 Roma (IT)
(72) Inventor: D'Errico, Federico, I-00186 Roma (IT)

(56) References cited:
- EP-A- 0 145 677
- EP-A- 0 494 624
- IEEE TRANSACTIONS ON CONSUMER ELECTRONICS, vol.38, no.3, August 1992, NEW YORK US pages 725 - 733 KINGHORN 'ENHANCED ON-SCREEN DISPLAYS FOR SIMPLER TV CONTROL'
- NTZ NACHRICHTENTECHNISCHE ZEITSCHRIFT, vol.42, no.11, November 1989, BERLIN DE 'TOP MACHT FERNSEHTEXT BENUTZERFREUNDLICH, PAGES 724, 726, 727.'

## Description

The present invention relates to a decoder of teletext signals of the type known as TOP, equipped with four coloured selection keys.

It is known that in various European countries, among which Italy, systems are in use (generally known with the English word "teletext", and more precisely designated in Italy as "Televideo" and in Germany as "Videotext") that allow for the transmission, together with the normal television signals, of additional information, inserted in the video signal (under the form of digital coded signals) in some of the free horizontal lines during the period of vertical retrace.

These coded signals, upon a command by the user, are detected by an appropriate circuit decoder, known and normally realised by means of monolithic integrated circuits, inserted in the circuits of the television, so as to allow for the display on the television screen one of the information pages transmitted, containing text and graphics.

The pages normally transmitted are of several hundreds, grouped by subject (for example: latest news: pages 110-125, sport: pages 150-162, politics: pages 210-222, games: pages 315-345, etc.); the first page (page 100) usually contains the general subject index, and in the successive pages the sub-indexes for each subject, with the relative page numbers.

The user has to, each time it is desired to receive a determined page, input a sequence using three numbered keys so as to form the three digit number of the searched page; the decoder begins to receive the pages as they are transmitted, one after the other, by the broadcaster; as soon as the page distinguished by the sequence of digits inputted by the user is transmitted, the decoder provides for its acquisition.

The main drawback of teletext is the time necessary for the acquisition; numerous systems have been proposed for reducing such drawback (TOP, FLOF, TOPLESS).

In the TOP system the grouping of the pages is organised according to a structure of two levels (blocks and groups). The command device, generally a remote control, is equipped with four supplement keys, each coloured in a different manner, which allow for the access, respectively, to the next page of the group, to the first page of the next group (typically containing the relative index), to the first page of the successive block (typically containing the relative index), to the previous page selected. In other implementations the fourth access key provides access to the previous page of the group.

Such an organisation of the remote control does not seem to be very rational. For instance if the user is interested in a particular group (for example the group of internal political news, belonging to the news block), it is reasonable to suppose that he will first of all consult the relative index, then, he will or decide to turn over the pages of the group, being as that they are all of interest, or choose some specific pages.

In the first case TOP supplies the user with a great help, in that pressing the appropriate coloured key, the sequential access to all the pages of the group is available, even if they are not consecutively numbered. In the second case however the user will call with conventional means the first page of interest, then, for passing to the second page of interest, (the number of which in the meantime he will almost certainly have forgotten), shall have to return to the group index. Unfortunately a coloured key does not exist that allows for carrying out this operation in a single move, but there is however a coloured key that provides access to the index of the successive group. For obtaining the index of the actual group the said key will have to be pressed the number of times necessary for passing all the existing groups, which constitutes a serious inconvenience.

Similar considerations are valid if the user wishes to have access to the index of the actual block.

Another serious inconvenience consists in the fact that TOP does not allow for turning over the sub-pages belonging to a determined rolling page in a cyclic manner. It would however be pleasing if the remote control provided appropriate keys also for carrying out this operation.

It Is known from EP-A-0494624 a receiver of teletext signals of the type known as TOP, equipped with four identified selection keys, wherein the receiver comprises additional means allowing for the selection of the group index page to which the choose page belongs,

The aim of the present invention is that of indicating a teletext signals decoder that overcomes the described drawbacks, further facilitating teletext use.

For overcoming the aforementioned drawbacks and allowing for a more rational use of the remote control apt for controlling a receiver according to the TOP system, the invention proposes to base itself on an idea applied in a lot of apparatus not using TOP.

For allowing such aims the present invention has as its subject a decoder of teletext (Televideo)

Further aims and advantages of the present invention shall result in being clear from the following detailed description and annexed drawings, supplied purely as an explanatory and non-limiting example, wherein:
figure 1 schematically represents a part of the electrical circuit of a teletext transmissions receiver;
figure 2 schematically represents a significant part of the logic circuit of the control unit of figure 1.

TOP provides the possibility of displaying the successive page actually transmitted, or the previous.

According to the invention it is proposed that it may be more useful for the user, to have the possibility of turning, or forwards or backwards, the pages of a determined group, the group indexes and the block indexes. Furthermore this same possibility should also be allowed within the rolling pages.

According to the invention it is proposed therefore to organise the remote control in the following way, as opposed to the TOP standard: the keys "+" and "-", present on practically all TOP remote control units, are maintained, but the page to be reached, forward or backward, is determined by the four typically coloured TOP keys.

In other words, pressing the coloured keys it is decided whether to turn, forward or backward, the pages belonging to one of the following four groups:
- the selected group;
- the first pages of the groups (containing the relative indexes);
- the first pages of the blocks (containing the relative indexes;
- the sub-pages belonging to the selected file.

The actual operation of turning over the pages takes place by pressing the "+" and "-" keys, which the user is used to. Moreover it is provided that the pressing of the coloured key that introduces the possibility of turning over the group indexes also produces the immediate display of the index of the actual block.

It is believed that the user can become familiar sooner with this type of organisation of the remote control unit, as opposed to that originally provided by TOP; apart from which, the proposed organisation eliminates the aforementioned inconveniences.

It is to be noted that the proposed organisation does not alter in the slightest the transmission specifications of the TOP system, but only represents a characteristic of the receiver.

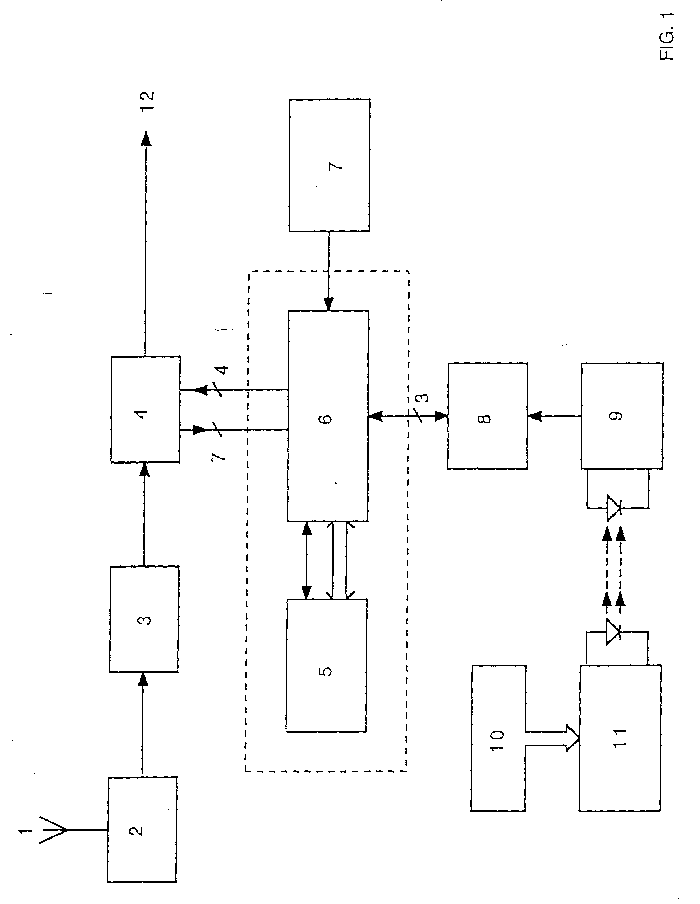

In figure 1 reference number 1 indicates a receiving antenna, connected to a television receiver for picking up the transmitted television signals, containing teletext signals. Said antenna is connected to a conventional tuner, indicated with reference number 2; to said tuner follows an intermediate frequency signals amplifier, also conventional, comprising a video detector, indicated with number 3.

The amplifier 3 supplies in output the composite video signal and is connected to an amplifying circuit and video signal processor indicated with reference number 4; the processing circuit 4 can be for example of the kind VCU 2133 by ITT, which also carries out the analog to digital conversion and the digital to analog reconversion of the signal; at the output (reference number 12) of circuit 4 the three R,G,B (red, green, blue) signals are available for the image displayer (colour picture tube, not represented in the figure).

The processing circuit 4 is connected, by way of two multiwire connections, with a teletext signals decoder, indicated with reference number 6.

The decoder circuit 6 comprises:
- a data acquisition unit, that receives the digitised input video signal, coming from circuit 4;
- a RAM memory that has the purpose of a buffer of the teletext page to be displayed;
- a control unit of the external memory of at least 8 pages indicated with number 8;
- a character generator and a display control circuit;
- a timing unit, that receives the clock signal from the clock circuit generator, indicated with reference number 7, that can be for example of the kind MCU 2632 by ITT;
- an interface for the bus coming from the central control unit 8.

The acquisition of teletext data begins in the television line 7 and terminates in line 22; the teletext information is synchronised and identified; a comparator, preselects the pages the numbers of which have been requested by the control unit 8 and it stores them in the memory 5; the internal memory is used as a buffer.

The display begins at line 48 and terminates at line 286; the decoder selects one of the eight pages memorised for display; the 8 bit words (characters) are transformed in a matrix of 6x10 points by the character generator and are displayed in 24 lines of 40 characters each.

The circuit 6 receives the commands from the unit 8 by way of an appropriate bus .

The external memory 5 of 64 Kbit is arranged in 8 sectors of 8 Kbit each; every sector memorises a page and is organised in 25 lines of 40 bytes each, plus a line of 24 bytes; the lines 0-23 represent the 24 lines of the teletext page to be displayed; the line 25 of every sector is used for the control information of the relative sector, while the lines 24 of sectors zero and one respectively contain general control information and the rolling header. The general control unit, indicated with the reference number 8, can be for instance of the CCU 2030 type by ITT, or other logic control circuit comprising a similar microprocessor and an appropriate operative instruction program.

Said central control unit, apart from the circuit 6, is connected to an amplifying circuit, indicated with reference number 9, that has the function of a receiver of signals of infrared rays, command from a remote control unit, indicated with reference number 11; the latter being connected to a command keyboard, indicated with reference number 10.

The commands inputted by the user, by way of the keyboard 10, through the transmitter 11 and the receiver 9, reach the control unit 8, which provides for their decoding and to supply the appropriate control signals to the circuit 6.

Upon the selection of the page by the user, the decoder can know whether the page is a roller (i.e. making up part of a file), the number of pages of which the file is composed and the number of that particular sub-page; this data is generally contained for instance in two bytes, contained in line 1 of the page that defines the rolling index, i.e. the number of the sub-page, followed by the total number of sub-pages of the file (for instance 11/16 if dealing with the sub-page 11 of a file of 16 pages); this data is also visible on the image; moreover, in the Televideo as transmitted by RAI, the sub-page number (11) is also contained in line zero, i.e. in the page heading, that is not displayed.

However in the TOP system all the necessary information is contained in the TOP tables; more precisely the Basic TOP Table contains the list of the existing pages, and also contains the information as to whether they are static or rolling pages; the Multipage Table then goes on to show how many sub-pages are contained in each file.

According to the invention it is therefore proposed that the depressing of the coloured keys activates the decoder to select, forward or backward, in reply to the depression of the keys "+" or "-", the pages belonging to one of the following groups:
- first key: the pages of the selected group;
- second key: the first pages of the groups;
- third key: the first pages of the blocks;
- fourth key: the sub-pages of the selected file.

By depressing the second coloured key (that introduces the possibility of flipping through the group indexes) the immediate display of the index of the selected group is also displayed; by depressing the third coloured key (that introduces the possibility of flipping through the block indexes) the index of the selected block is also immediately displayed.

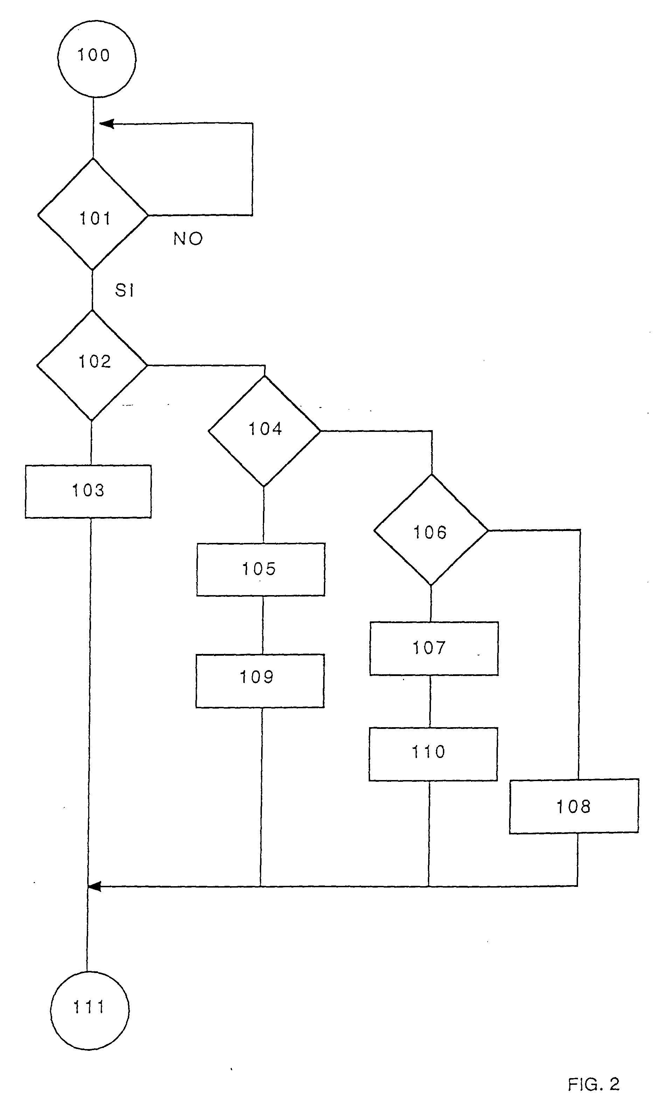

In figure 2 a significant part of the central control unit 8 is schematically represented, that will clarify the functioning of the operations.

Block 100 is the starting block of the operation of selecting functions of the decoder; the control then passes to the successive block 101.

Block 101 is a control block; it controls whether a coloured selection key has been depressed on the command device. (remote control unit); in the affirmative case control passes to block 102; in the negative case passes back to block 101 (in all the control blocks the lower output is the YES output; the lateral output is the NO output).

Block 102 is a control block; it controls whether the coloured key depressed is the first key; in the affirmative case control passes to block 103; in the negative case control passes to block 104.

Block 104 is a control block; it controls whether the coloured key depressed is the second key; in the affirmative case control passes to block 105; in the negative case control passes to block 106.

Block 106 is a control block; it controls whether the coloured key depressed is the third key; in the affirmative case control passes to block 107; in the negative case control passes to block 108.

Block 103 provides for activating the keys "+" and "-" to select (acquire or display), respectively, in a increasing or decreasing manner, the pages of the selected group; control passes to the successive block 111.

Block 105 provides for acquiring the and displaying the first page of the selected group; control then passes on to the successive block 109.

Block 109 provides for activating the "+" and "-" keys to select (acquire and display), respectively the first page of the group successive to that selected or the first page of the previous group to that selected; control passes to the successive block 111.

Block 107 provides for acquiring and displaying the first page of the selected block; control then passes to the successive block 110.

Block 110 provides for activating the keys "+" and "-" to select (acquire and display), respectively the first page of the block successive to that selected or the first page of the previous block to that selected; control passes to the successive block 111.

Block 108 provides for activating the keys "+" and "-" to select (acquire or display), respectively, in a increasing or decreasing manner, the sub-pages of the selected file; control passes to the successive block 111.

Block 111 is the final block of the end of operation; control can return to the starting block 100 or to another similar operative block of the control circuit. The characteristics of the decoder subject of the present invention result in being clear from the description of the example.

From the given description the advantages of the decoder subject of the present invention also result in being clear.

In particular they consist in the fact that the immediate access is permitted to:
- the successive page of the selected group;
- the previous page of the selected group;
- the index page of the actual group;
- the index page of the successive group;
- the index page of the previous group;
- the index page of the actual block;
- the index page of the successive block;
- the index page of the previous block;
- the previous sub-page of the selected file;
- the successive sub-page of the selected file.

All of which is obtained without any substantial costs to the receiver.

It is obvious that, remaining with the principles of the invention, numerous variants are possible to the characteristics of the decoder described as an example, without departing from the scope of novelty inherent in the inventive idea, as it is clear that the apparatus used in connection with the described method in a practical actuation of the invention could be varied in their specific characteristics and that the components utilised could be substituted with technically equivalent elements.

For example the described method for improving the functioning of the decoder of the TOP type could also be applied in the case of functioning with a teletext system of a normal type, not TOP; in this case it would be possible to consider for example fixed blocks and groups, for example defining the starting block of page 100, 200, 300, and so on; and the starting groups of ten in ten pages (110, 120, 130, etc.).

## Claims

1. Decoder for a receiver of teletext signals, transmitted according to the system known as TOP, namely a system where the grouping of the teletext pages or files, a file consisting of a number of sub-pages, is organised according to a two-level structure in blocks and groups, wherein a group belongs to a block, and where the command device of said decoder is equipped with four additional keys, each one coloured in a different manner, which, when a teletext page or file of a group is selected and displayed onto the screen of the teletext signal receiver, allow for the access, respectively, to the next page of the same group, to the first page, namely the index page, of the next group, to the first page, namely the index page, of the next block, and to the previously selected page or to the previous page of the group, **characterised in that** the decoder provides two sequential exploration keys (+,-), the function of which is determined by the selection carried out by way of one of said additional coloured keys, and that the decoder has logic means (101, 102, 103, 104, 106, 108, 109, 110) and wherein, by respectively depressing the said additional keys, the decoder is activated for flipping, by means of said sequential exploration keys (+, -), in one sense or another, through the pages, or respectively the sub-pages, belonging to one of the following groups or blocks:
the pages of the actually selected group, namely the group to which the displayed page pertains, when the first additional key is depressed;
the first pages, namely the indexes, of all groups, when the second additional key is depressed;
the first pages, namely the indexes, of all the blocks, when the third additional key is depressed;
the sub-pages belonging to the selected file of actually selected group, when the fourth additional key is depressed.

2. Decoder of teletext signals, according to claim 1, **characterised in that** it has logic means (104,105), which provide the possibility that, when depressing the additional key which introduces the possibility of flipping through the indexes of the groups, also produces the immediate display of the index of the group to which the displayed page pertains.

3. Decoder of teletext signals, according to claim 1, **characterised in that** it has logic means (106,107), which provide the possibility that, when depressing the additional key which introduces the possibility of flipping through the indexes of the blocks, also produces the immediate display of the index of the block to which the displayed page pertains.

4. Receiver of television signals comprising the teletext signal receiver according to one or more of the previous claims.

## Patentansprüche

1. Decoder für einen Empfänger von Fernsehsignalen, welche nach dem als TOP bekannten System übertragen werden, einem System, bei welchen Eingruppierungen von Teletextseiten oder Ordner, welche entweder vom einfachen Typ oder vom mehrfachen Typ, nämlich dem sogenannten Ordnertyp, der aus einer Anzahl von Unterseiten besteht, organisiert ist nach einer zweistufigen Struktur in Blöcken und Gruppen, wobei eine Gruppe einem Block zugehörig ist und wobei die Befehlseinrichtung des Decoders mit vier zusätzlichen Tasten ausgestattet ist, von denen jede in einer anderen Weise gefärbt ist, welche, wenn eine Teletextseite oder Ordner einer Gruppe ausgewählt und auf dem Bildschirm des Teletextsignalempfängers angezeigt wird den Zugang zur nächsten Seite derselben Gruppe, zur ersten Seite nämlich der Indexseite der nächsten Gruppe, zur ersten Seite nämlich der Indexseite des nächsten Blocks und zur vorherigen ausgewählten Seite oder zur vorhergehenden Seite der Gruppe erlaubt, gekennzeichnet dadurch, dass der Decoder zwei sequentielle Untersuchungstasten (+,-) aufweist, deren Funktion bestimmt ist durch die Selektion, die durch eine der zusätzlichen gefärbten Tasten ausgewählt ist und dass der Decoder Logikmittel (101, 102, 103, 104, 106, 108, 109, 110) aufweist und worin durch entsprechendes Drücken der zusätzlichen Tasten der Decoder mittels der sequentiellen Explorationstasten (+,-) aktiviert wird zum Aufknipsen in einem oder anderen Sinn von Seiten oder entsprechend der Unterseiten, die zu einer der folgenden Gruppen oder Blöcken gehört:
die Seiten der aktuell selektierten Gruppe, nämlich der Gruppe, zu welcher die angezeigte Seite gehört, wenn die erste zusätzliche Taste gedrückt wird;
die ersten Seiten, nämlich die Indizes von allen Gruppen, wenn die zweite zusätzliche Taste gedrückt wird,
die ersten Seiten, nämlich die Indizes von allen Blöcken, wenn die dritte zusätzliche Taste gedrückt wird;
die Unterseiten, die zu dem ausgewählten Ordner der aktuell ausgewählten Gruppe, wenn die vierte zusätzliche Taste gedrückt wird, gehören.

2. Decoder von Teletextsignalen gemäß Anspruch 1,
**dadurch gekennzeichnet, dass** er Logikmittel (104, 105) aufweist, welche die Möglichkeit bereitstellen, dass wenn die zusätzliche Taste gedrückt wird, welche Möglichkeit des Aufknipsens durch die Indizes von Gruppen vorsieht, auch die sofortige Anzeige des Index der Gruppe, zu welchem die Seite gehört, herstellt.

3. Decoder von Teletextsignalen gemäß Anspruch 1,
**dadurch gekennzeichnet, dass** er Logikmittel (106, 107) aufweist, welche die Möglichkeit bereitstellen, dass wenn die zusätzliche Taste gedrückt wird, welche die Möglichkeit des Aufknipsens durch die Indizes von Blöcken vorsieht, auch die sofortige Anzeige des Indexes eines Blocks, zu welchem die angezeigte Seite gehört, herstellt.

4. Empfänger von Empfängersignalen, die ein Teletextsignalempfänger nach einem oder mehreren der vorhergehenden Ansprüche verwenden.

## Revendications

1. Décodeur pour un récepteur de signaux de télétexte, qui sont transmis selon le système appelé TOP, un système dans lequel des groupements de pages ou de dossiers de télétexte, de type simple ou de type multiple, notamment du type dit dossier composé d'un certain nombre de pages secondaires, sont organisés selon une structure à deux niveaux en blocs et groupes, dans laquelle un groupe appartient à un bloc, et dans lequel le dispositif de commande dudit décodeur est équipé de quatre touches supplémentaires, colorées chacune différemment, qui, lorsqu'une page ou un dossier de télétexte d'un groupe est sélectionné(e) et affiché (e) à l'écran du récepteur de signaux de télétexte, autorise l'accès respectivement à la page suivante du même groupe, à la première page, à savoir la page d'index, du groupe suivant, à la première page, à savoir la page d'index, du bloc suivant, et à la page sélectionnée auparavant ou à la page précédente du groupe, **caractérisé en ce que** le décodeur présente deux touches de recherche séquentielle (+,-) dont la fonction est déterminée par la sélection qui est effectuée au moyen de l'une des touches colorées supplémentaires, et en ce que le décodeur présente des moyens de logique (101, 102, 103, 104, 106, 108, 109, 110), et dans lequel en actionnant respectivement lesdites touches supplémentaires le décodeur est activé pour parcourir, au moyen desdites touches d'exploration séquentielle (+,-) dans un sens ou l'autre les pages ou respectivement ies pages secondaires, qui appartiennent à l'un des groupes ou blocs suivants :
les pages du groupe effectivement sélectionné, à savoir le groupe auquel appartient la page affichée, lorsque la première touche supplémentaire est actionnée;
les premières pages, à savoir les index de tous les groupes, lorsque la deuxième touche supplémentaire est actionnée,
les premières pages, à savoir les index de tous les blocs, lorsque la troisième touche supplémentaire est actionnée;
les pages-secondaires, qui appartiennent au dossier sélectionné du groupe effectivement sélectionné, lorsque la quatrième touche supplémentaire est actionnée.

2. Décodeur de signaux de télétexte selon la revendication 1, **caractérisé en ce qu'**il présente des moyens de logique (104, 105) qui offrent la possibilité, lorsque la touche supplémentaire qui introduit la possibilité de parcourir les index des groupes, est actionnée d'établir aussi l'affichage immédiat de l'index du groupe auquel appartient la page affichée.

3. Décodeur de signaux de télétexte selon la revendication 1, **caractérisé en ce qu'**il présente des moyens de logique (106, 107) qui offrent la possibilité, lorsque la touche supplémentaire qui introduit la possibilité de parcourir les index de blocs, est actionnée d'établir aussi l'affichage immédiat de l'index du bloc auquel appartient la page affichée.

4. Récepteur de signaux de télévision qui utilise un récepteur de signaux de télétexte selon une ou plusieurs des revendications précédentes.
